# EUROPEAN PATENT SPECIFICATION

(11) **EP 3 245 917 B1**
(45) Date of publication and mention of the grant of the patent: **12.12.2018**
(21) Application number: 17165353.8
(22) Date of filing: 06.04.2017
(51) Int. Cl.: A47J 31/52

(54) **METHOD FOR COUNTING THE COFFEES SUPPLIED BY A "TRADITIONAL" PROFESSIONAL COFFEE MACHINE IN A PUBLIC LOCATION**
VERFAHREN ZUM ZÄHLEN DER KAFFEES, DIE VON EINER »TRADITIONELLEN PROFESSIONELLEN KAFFEEMASCHINE AN EINEM ÖFFENTLICHEN ORT BEREITGESTELLT WERDEN
PROCÉDÉ POUR COMPTER LES CAFÉS FOURNIS PAR UNE MACHINE À CAFÉ PROFESSIONNELLE « CLASSIQUE » DANS UN LIEU PUBLIC

(30) Priority: 16.05.2016 IT UA20163455
(43) Date of publication of application: 22.11.2017
(73) Proprietor: BIEPI S.r.l., 24040 Castel Rozzone (BG) (IT)
(72) Inventor: Prezzamà, Nicola, 24040 Castel Rozzone (BG) (IT); Defendi, Gianluca, 24050 Lurano (BG) (IT)
(74) Representative: Martegani, Franco

(56) References cited:
- WO-A1-02/064004
- WO-A1-2011/140582
- CN-U- 202 036 027
- GB-A- 2 448 891
- US-A- 4 651 632

## Description

The present invention relates to a method for counting the coffees supplied by a coffee machine in a public location.

It is known that traditional coffee machines are used in various public locations, such as bars, restaurants and public places in general, for producing espresso coffees, cappuccinos and other hot beverages requested by customers. These coffee machines are called "traditional professional", to distinguish them from professional machines called "super automatic", which also incorporate in the coffee machine, the grinder and loading/automatic expulsion system of the coffee tablets. Traditional machines therefore always have an adjacent grinder, which grinds and dispenses the amount of coffee necessary for making one or two coffees.

These coffee machines are generally owned by the manager of the public location or are given on loan by the coffee roaster that supplies the coffee to said manager. This second mode of ownership for use of coffee machines is extremely widespread, especially on the Italian market, but can also be found in other foreign countries.

Coffee machines in public locations are particularly pressurized by the quantity of daily supplies involved and must therefore always function perfectly to be able to supply a good-quality coffee.

It should also be taken into account that coffee is one of the main and leading products for bars, and consequently the machine should never stop for faults or drawbacks due to lack of or insufficient cleaning or any type of preventive maintenance.

Scheduled maintenance operations must therefore be effected on the single coffee machine, which depend on a whole series of variables that can influence the correct functioning of the machine and quality of the coffee in the cup.

Up until now, interventions on the machine have been left to the user's professionalism or are programmed according to prefixed times in relation to approximate and alleged calculations of its use. The document GB 2 448 891 A discloses a coffee quality monitoring system for coffee machine.

It does not appear to be known, in fact, that the number of coffees supplied by a coffee machine can be established with a certain accuracy in order to be able to effect whatever is required for its correct functioning after a certain number of supplies.

Numerous variables are in fact present during the functioning of a coffee machine in a public location. These variables make it impossible to understand with certainty whether the coffee machine is dispensing coffee or carrying out some other routine operation or accidently requested by the operator who is using it.

It should be pointed out, in fact, that coffees are made in Italy with a portion of coffee of 7 grams for 1 coffee and 14 grams for 2 coffees. These quantities of coffee are ground and dosed by a coffee grinder which is always next to the coffee machine, the coffee tablet taken from the grinder for one/two coffees is pressed with more or less force depending on the operator's habits and this operation can also affect the quality or result of the coffee in the cup and the coffee dispensing time.

Furthermore, the coffee beans can be properly ground, or with coarse or fine grinding and also in this case there can be completely different results in terms of quality of coffee in the cup and dispensing times for producing the coffee.

The machines of interest can have from one to four coffee dispensing groups, and each group can make one or two coffees a time, and for each of these coffee dispensing groups there is the presence of one or more dispensing buttons.

The single buttons for each coffee dispensing group of the machine can be used for making: one coffee, two long or short coffees, the washing of the group, a provision of a small amount of water before making the single coffee, all also in relation to the bartender's habits.

Furthermore, there is always a button on each group which allows a continuous supply to be effected and which can therefore indifferently provide either one or two coffees, either short or long as required and depending on the bartender's ability.

It is consequently evident that there are truly numerous variables at play.

It is not possible to keep count, moreover, of the number of times a single button is pressed, as it cannot be determined whether this pressure action corresponds with certainty to the dispensing of one or two coffees or whether said pressure is accidental or activated for some other necessity or requirement of the operator.

It is therefore possible, according to what is currently in use, that a planned intervention on the coffee machine be either too early or too late with respect to the actual needs of the individual coffee machine.

A general objective of the present invention is to provide a method capable of solving the drawbacks of the known art described above in an extremely simple, economical and particularly functional manner.

A further objective of the present invention is to provide a method for establishing with a certain accuracy, the number of coffees supplied by a coffee machine in a public location to be able to intervene to effect what is necessary for its correct functioning.

Another objective of the present invention is to possibly indicate or determine in some way the necessity of an intervention on a coffee machine on reaching a certain number of coffees dispensed by a coffee machine.

The structural and functional characteristics of the present invention and its advantages with respect to the known art will appear even more evident from the following description, referring to the enclosed schematic drawings, which show an embodiment of the method according to the invention itself. In the drawings:
- figure 1 shows a completely schematic raised front view of a generic traditional professional coffee machine;
- figure 2 is a block scheme showing an example of a hydraulic circuit of a professional coffee machine with automatically dosed dispensing capable of implementing the method of the invention.

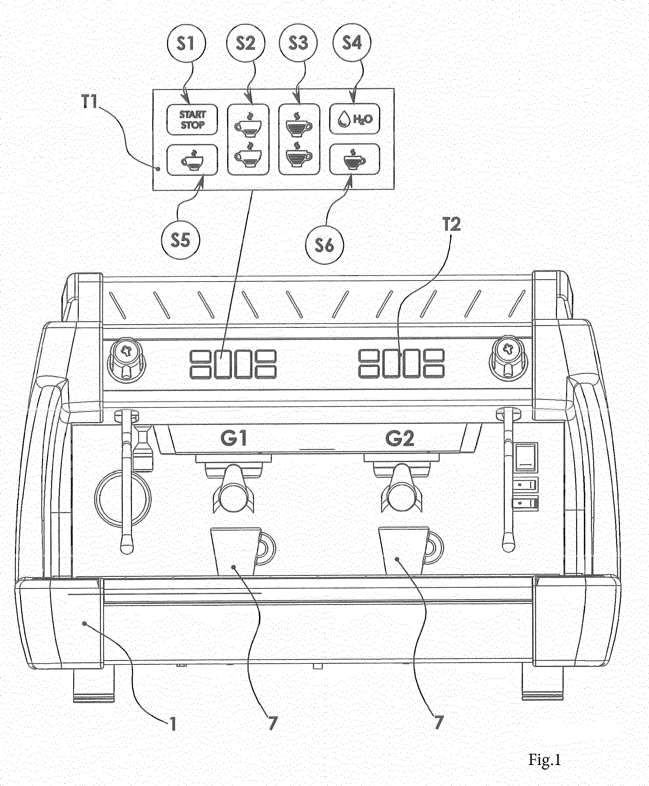

With reference first of all to figure 1, this shows by means of a completely schematic raised front view of a generic professional coffee machine indicated as a whole with 1.

A coffee machine 1 of this type, only illustrative and non-limiting, provides two coffee dispensing groups G1 and G2 for supplying a single coffee or two coffees simultaneously in two underlying cups 7. There can be from one to four coffee groups, but the version with two groups is more common.

A control pushbutton T1 or T2 comprising one or more buttons is provided in correspondence with each coffee group G1 or G2. The example indicates a so-called "start-stop" continuous supply button S1, a single short coffee button S5, a single long coffee button S6.

A button for two short coffees S2, a button for two long coffees S3 and a button for supplying only water S4, are also provided.

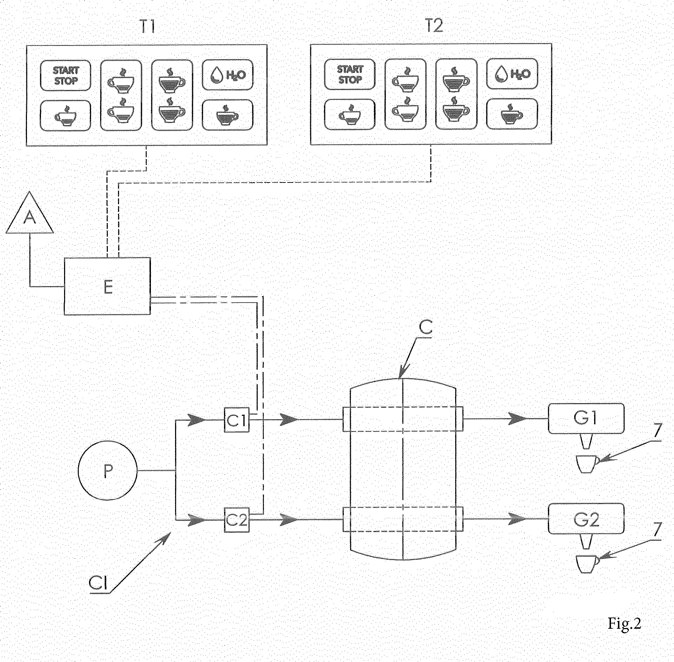

Figure 2 illustrates a block scheme showing an example of a hydraulic circuit CI of a traditional coffee machine with automatically dosed dispensing. As already indicated, in this hydraulic circuit, said buttons S1, S2, S3, ... SN are present in the control pushbutton T1, and can be activated by the bartender or user.

The pressure of a generic button causes the supply of a quantity of water through a pump P controlled by a water meter C1, C2,... CN.

This quantity of water is then sent to a heater C in which the water is brought to a certain operating temperature.

Said quantity of water then reaches a supply group G1, G2,... GN positioned above a relative cup 7 which receives the coffee beverage.

According to the present invention, it is envisaged that each water meter C1, C2,... CN is operatively connected to a central processing group E which verifies the number of pulses of the single water meter C1, C2,... CN.

The information provided by the water meters C1, C2,... CN (volumetric meters) are then used for comparing them with the number of pulses effected when a single coffee or two coffees are supplied.

It has in fact been found that for the supply of a single coffee in any meter C1, C2,... CN, there is a (total) number of pulses ranging from 60 to 110. Furthermore, for the supply of two coffees in any meter C1, C2,... CN, there is a number of pulses ranging from 120 to 190. The supply of a single coffee or two coffees, moreover, in some cases envisages an activation time of at least 2.5".

On the basis of these prefixed pulse numbers and activation time for at least one supply, the average of the pulses per second can be calculated. This calculation is effected by producing a ratio between the number of pulses detected by the meter and the dispensing time verified for each single activation.

If the value of this ratio exceeds 10 pulses per second, it is certain that this is not a coffee supply.

Furthermore, supplies with a number of pulses outside the two ranges indicated above are not taken into consideration.

On the basis of all of these fixed parameters, at the end of each activation of the coffee machine, the central processor E indicates whether or not a coffee supply has been effected. In this way, the coffees actually dispensed by a coffee machine in a public location can be counted. The values indicated above refer to a certain type of meter which has been considered for carrying out tests suitable for implementing the method of the invention. It is evident that if a meter is used with a different flow-rate of water and number of pulses, other numerical values can be found, but in principle, the inventive concept of the present invention previously specified will always be applicable and the same.

When the coffee machine has reached a total number of supplies predetermined before its installation and defined as the correct number of supplies for a programmed maintenance intervention or other interventions on the machine, the central processor E activates an alarm A or causes a blockage of the coffee machine 1.

This allows a correct intervention to be effected according to the actual necessity of the machine.

This verification is particularly advantageous as it identifies with certainty the number of coffees actually dispensed by the coffee machine.

It can therefore be seen how the present invention has specifically found a method for counting the coffees effectively dispensed, discarding all activations of the coffee machine or one of its buttons which, on the contrary, do not effect a coffee supply.

This method offers various advantages, such as, for example, an automatic generation of signals for the maintenance of the coffee machine, such as the ignition of a warning light A which lights up to indicate that a maintenance intervention is required or that certain components must be checked.

A blockage of the coffee machine can be forced, for example, after a certain number of effective supplies, in order to ensure that some of the parts of the groups be washed or substituted or that a decalcification cycle be effected, which is in any case essential for preserving its functionality. As already indicated, a programmed maintenance can be effected, the water consumption can be verified, and the effective operating hours of the machine after said number of supplies can also be verified, etc.

Alternatively, when a prefixed number is reached in the installation phase, the activity of the coffee machine may be suspended also for other purposes.

It is known in fact that numerous coffee roasters in Italy sell coffee and provide coffee machines on loan to try and sell their own coffee.

It is obvious that if they give their coffee machines on loan to a bartender, they have the reasonable expectation and it is important for them that only their own coffee and not that of other coffee roasters be used on their machines.

This issue is of great interest to coffee roasters who invest their money in purchasing coffee machines and have no guarantee that all the coffee used by the bartender is only and exclusively provided by them.

The possibility of a possible blockage of the machine or, alternatively, notice to the bartender that the coffee purchased is finished, can favour this practice.

In short, by exploiting the control system of the water supplied in a coffee machine, a way has been found of using the indications provided by this component in order to distinguish with certainty what types of coffee have been made or whether coffees have not been made, even if the buttons of the coffee machine have been pressed.

As can be seen, this method is advantageously able to recognize the quantity of coffee cups dispensed by a coffee machine, whether said coffee machine produces single coffees, double coffees, long or short coffees, and is such that it does not count all the selections effected by the operator that do not produce a coffee supply.

Other possible additional steps to those previously described, for purely illustrative and non-limiting purposes, for implementing the invention are naturally not excluded from the protection scope of the present invention.

The objective mentioned in the preamble of the description has therefore been achieved.

The protection scope of the present invention is defined by the enclosed claims.

## Claims

1. A method for counting the coffees supplied by a coffee machine in a public location, wherein said machine comprises at least one coffee dispensing machine (G1, G2,...GN) for the supply of a single coffee, or two coffees simultaneously in underlying cups (7), wherein a control pushbutton (T1, T2,...TN) is provided in correspondence with each coffee supply group (G1, G2,...GN), comprising one or more buttons (S1, S2, S3, S4,...SN), a hydraulic circuit (CI) being provided comprising a water meter (C1, C2,...CN), a pump (P) a heater (C) in which the water leaving said water meter (C1, C2,...CN) is heated to a certain operating temperature to be sent to a supply group (G1, G2,...GN) positioned above a relative cup (7), each water meter (C1, C2, ...CN) being operatively connected to a central processing group (E), the method comprising the following steps:
- verifying the number of pulses of the single water meter (C1, C2,...CN) with each activation of a button (S1, S2, ...SN) of said control pushbutton (T1, T2,...TN) of the single supply group (G1, G2,...GN),
- using the information provided by the water meters (C1, C2,...CN) to compare it with the number of pulses effected when a single coffee or two coffees are supplied,
- calculating the average of the pulses per second for each activation,
- not calculating as a coffee supply if the value of said ratio exceeds a prefixed value,
- counting each supply identified.

2. The method according to claim 1, **characterized in that** said comparison for the supply of a single coffee is effected by verifying that the number of pulses of said activated water meter is within a number of pulses ranging from 60 to 110.

3. The method according to claim 1 or 2, **characterized in that** said comparison for the supply of two coffees is effected by verifying that the number of pulses of said activated water meter is within a number of pulses ranging from 120 to 190.

4. The method according to one or more of the previous claims from 1 to 3, **characterized in that** said prefixed value of said ratio is higher than 10 pulses per second.

5. The method according to one or more of the previous claims from 1 to 4, **characterized in that** said step of counting each supply effected is followed by a step wherein an alarm (A) is activated when a prefixed value of supplies is reached.

6. The method according to claim 5, **characterized in that**, when a prefixed value of supplies effected and recorded is reached, a stoppage of the coffee machine is activated.

7. The method according to one or more of the previous claims from 1 to 6, **characterized in that** it provides the further step of verifying that the activation time of a button (S1, S2, ...SN) is at least 2.5".

## Patentansprüche

1. Verfahren zum Zählen der Kaffees, die von einer Kaffeemaschine an einem öffentlichen Ort ausgegeben werden, wobei die Maschine mindestens eine Kaffeespendermaschine (G1, G2,... GN) für das Ausgeben eines einzelnen Kaffees oder von zwei Kaffees gleichzeitig in darunter stehende Tassen (7) umfasst, wobei eine Steuerungsschaltfläche (T1, T2,... TN) in Verbindung mit jeder Kaffeeausgabegruppe (G1, G2,... GN) bereitgestellt ist, welche einen oder mehrere Druckknöpfe (S1, S2, S3, S4,... SN) umfasst, wobei ein Hydraulikkreis (CI) bereitgestellt ist, der einen Wasserverbrauchszähler (C1, C2,... CN), eine Pumpe (P) und eine Heizung (C) umfasst, in welcher das Wasser, das den Wasserverbrauchszähler (C1, C2,... CN) verlässt, auf eine bestimmte Betriebstemperatur erwärmt wird, um es an eine Ausgabegruppe (G1, G2,... GN) zu senden, die über einer zugehörigen Tasse (7) positioniert ist, wobei jeder Wasserverbrauchszähler (C1, C2,... CN) mit einer zentralen Verarbeitungsgruppe (E) wirksam verbunden ist, wobei das Verfahren die folgenden Schritte umfasst, dass:
- die Anzahl der Impulse jedes einzelnen Wasserverbrauchszählers (C1, C2,... CN) bei jeder Aktivierung eines Druckknopfes (S1, S2,... SN) der Steuerungsschaltfläche (T1, T2,... TN) jeder einzelnen Ausgabegruppe (G1, G2,... GN) verifiziert wird,
- die Informationen verwendet werden, die von den Wasserverbrauchszählern (C1, C2,... CN) bereitgestellt werden, um sie mit der Anzahl der Impulse zu vergleichen, die erzeugt werden, wenn ein einzelner Kaffee oder zwei Kaffees ausgegeben werden,
- der Mittelwert der Impulse pro Sekunde für jede Aktivierung berechnet wird,
- wenn der Wert dieses Verhältnisses einen vorab festgelegten Wert überschreitet, es nicht als eine Kaffeeausgabe gerechnet wird,
- jede erkannte Ausgabe gezählt wird.

2. Verfahren nach Anspruch 1, **dadurch gekennzeichnet, dass** der Vergleich für die Ausgabe eines einzelnen Kaffees bewirkt wird, in dem verifiziert wird, dass die Anzahl der Impulse des aktivierten Wasserverbrauchszählers innerhalb einer Anzahl von Impulsen liegt, die in einem Bereich von 60 bis 110 liegt.

3. Verfahren nach Anspruch 1 oder 2, **dadurch gekennzeichnet, dass** der Vergleich für die Ausgabe von zwei Kaffees bewirkt wird, indem verifiziert wird, dass die Anzahl der Impulse des aktivierten Wasserverbrauchszählers innerhalb einer Anzahl von Impulsen liegt, die in einem Bereich von 120 bis 190 liegt.

4. Verfahren nach einem der vorstehenden Ansprüche 1 bis 3, **dadurch gekennzeichnet, dass** der vorab festgelegte Wert des Verhältnisses höher als zehn Impulse pro Sekunde ist.

5. Verfahren nach einem der vorstehenden Ansprüche 1 bis 4, **dadurch gekennzeichnet, dass** auf den Schritt des Zählens jeder erzielten Ausgabe ein Schritt folgt, bei dem ein Alarm (A) aktiviert wird, wenn ein vorab festgelegter Wert von Ausgaben erreicht worden ist.

6. Verfahren nach Anspruch 5, **dadurch gekennzeichnet, dass**, wenn ein vorab festgelegter Wert von erzielten und aufgezeichneten Ausgaben erreicht worden ist, ein Anhalten der Kaffeemaschine aktiviert wird.

7. Verfahren nach einem der vorstehenden Ansprüche 1 bis 6, **dadurch gekennzeichnet, dass** es den weiteren Schritt bereitstellt, dass verifiziert wird, dass die Aktivierungszeit eines Druckknopfes (S1, S2,... SN) mindestens 2,5 Sekunden beträgt.

## Revendications

1. Procédé pour compter les cafés fournis par une machine à café dans un lieu public, dans lequel ladite machine comprend au moins une machine de distribution de café (G1, G2, ...GN) pour la fourniture d'un seul café, ou de deux cafés simultanément dans des tasses sous-jacentes (7), dans lequel un bouton poussoir de commande (T1, T2, ...TN) est placé en correspondance avec chaque groupe de fourniture de café (G1, G2, ...GN), comprenant un ou plusieurs boutons (S1, S2, S3, S4, ...SN), un circuit hydraulique (CI) étant prévu, comprenant un compteur d'eau (C1, C2, ...CN), une pompe (P), un élément chauffant (C) dans lequel l'eau qui sort dudit compteur d'eau (C1, C2, ...CN) est chauffée à une certaine température de fonctionnement pour être envoyée à un groupe d'alimentation (G1, G2, ...GN) positionné au-dessus d'une tasse relative (7), chaque compteur d'eau (C1, C2, ...CN) étant relié fonctionnellement à un groupe de traitement central (E), le procédé comprenant les étapes suivantes :
- vérifier le nombre d'impulsions du compteur d'eau seul (C1, C2, ...CN) avec chaque activation d'un bouton (S1, S2, ...SN) dudit bouton poussoir de commande (T1, T2, ...TN) du groupe d'alimentation seul (G1, G2, ...GN),
- utiliser l'information fournie par les compteurs d'eau (C1, C2, ...CN) pour la comparer au nombre d'impulsions réalisées quand un seul café ou deux cafés sont fournis,
- calculer la moyenne des impulsions par seconde pour chaque activation,
- ne pas calculer comme fourniture de café si la valeur dudit rapport dépasse une valeur préétablie,
- compter chaque fourniture identifiée.

2. Procédé selon la revendication 1, **caractérisé en ce que** ladite comparaison pour la fourniture d'un seul café est réalisée en vérifiant que le nombre d'impulsions dudit compteur d'eau activé se trouve dans un intervalle de nombre d'impulsions de 60 à 110.

3. Procédé selon la revendication 1 ou 2, **caractérisé en ce que** ladite comparaison pour la fourniture de deux cafés est réalisée en vérifiant que le nombre d'impulsions dudit compteur d'eau activé se trouve dans un intervalle de nombre d'impulsions de 120 à 190.

4. Procédé selon l'une ou plusieurs des précédentes revendications 1 à 3, **caractérisé en ce que** ladite valeur préétablie dudit rapport est supérieure à 10 impulsions par seconde.

5. Procédé selon l'une ou plusieurs des précédentes revendications 1 à 4, **caractérisé en ce que** ladite étape de comptage de chaque fourniture réalisée est suivie d'une étape dans laquelle une alarme (A) est activée quand une valeur préétablie de fournitures est atteinte.

6. Procédé selon la revendication 5, **caractérisé en ce que**, quand une valeur préétablie de fournitures réalisées et enregistrées est atteinte, un arrêt de la machine à café est activé.

7. Procédé selon l'une ou plusieurs des précédentes revendications 1 à 6, **caractérisé en ce qu'**il comprend l'étape supplémentaire consistant à vérifier que le temps d'activation d'un bouton (S1, S2, ...SN) est d'au moins 2,5".
